**Europäisches Patentamt**

**European Patent Office**

**Office européen des brevets**

(19)

(11) Veröffentlichungsnummer : **0 161 240**
**B1**

(12) **EUROPÄISCHE PATENTSCHRIFT**

(45) Veröffentlichungstag der Patentschrift :
09.09.87

(51) Int. Cl.⁴ : **B 60 T   1/06**, B 60 K 17/04

(21) Anmeldenummer : 83903178.8

(22) Anmeldetag : 05.10.83

(86) Internationale Anmeldenummer :
**PCT/EP 83/00259**

(87) Internationale Veröffentlichungsnummer :
**WO/8402498 (05.07.84 Gazette 84/16)**

(54) ANORDNUNG EINER BREMSE IN EINEM RADKOPF.

(30) Priorität : 28.12.82 DE 3248250 U

(43) Veröffentlichungstag der Anmeldung :
21.11.85 Patentblatt 85/47

(45) Bekanntmachung des Hinweises auf die Patenterteilung : 09.09.87 Patentblatt 87/37

(84) Benannte Vertragsstaaten :
FR GB SE

(56) Entgegenhaltungen :
DE-A- 2 726 687
DE-A- 2 726 775
DE-A- 3 013 431
GB-A- 1 483 731
US-A- 4 010 830
US-A- 4 037 694
US-A- 4 142 615

(73) Patentinhaber : ZAHNRADFABRIK FRIEDRICHSHA-
FEN AKTIENGESELLSCHAFT
Löwentaler Strasse 100 Postfach 2520
D-7990 Friedrichshafen 1 (DE)

(72) Erfinder : EHRLINGER, Friedrich
Karl-Weiss-Str. 15
D-7990 Friedrichshafen 5 (DE)
Erfinder : KATZOREK, Karl-Hermann
Grüntenbühlstr. 15
D-7992 Tettnang (DE)
Erfinder : DZIUBA, Peter
Im Öschle 23
D-7770 Überlingen (DE)
Erfinder : VESER, Karl
Virchowstr. 2
D-7990 Friedrichshafen (DE)
Erfinder : CASPAR, Peter
Eulenstr. 7
D-7991 Oberteuringen (DE)

(74) Vertreter : Raue, Reimund
Zahnradfabrik Friedrichshafen AG Löwentaler
Strasse 100 Postfach 2520
D-7990 Friedrichshafen 1 (DE)

## Beschreibung

Die Erfindung betrifft eine Anordnung einer Bremse in einem mit Reduziergetriebe ausgestatteten Radkopf nach dem Oberbegriff des Anspruches 1. Eine solche Anordnung zeigt beispielsweise die DE-A 27 26 687. In dieser Konstruktion sind Innenbremsscheiben, die durch einen inneren Bremsscheibenträger auf einer vom Differential zum Sonnenrad durchgehend einstückigen Differentialwelle mitdrehbar gehaltert sind, und gegenüber Außenbremsscheiben, die in einer gehäusefesten Hohlradverzahnung drehfest abgestützt sind, relativ verdrehbar. Die Hilfskraftbetätigung der Bremse besteht hier aus einem druckmittelbetätigbaren Bremsdruckringkolben, dessen Zylinder im Hohlradträger eingelassen ist. Der innere Bremsscheibenträger besteht aus einer zwischen dem Sonnenrad und dem freien Ende des Achsträgerrohres bzw. der dieses abschließenden Hohlradträgerbefestigung angeordneten innen- und außenverzahnten Muffe, deren antriebsseitiger Stirnbund vom freien Ende des Achsträgerrohres nur durch eine Anlaufringscheibe getrennt ist.

Nachteile solcher, ähnlich auch aus der DE-A 30 13 431 oder US-A 40 37 694, bekannten Bauweisen traten insbesondere bei der Großserienfertigung von Achsen mit Radkopfgetrieben dann zutage, wenn z. B. die Übersetzungen und Hauptabmessungen wegen anderer Aufgaben oder Verwendungen unter Beibehaltung der eigentlichen Achsen und des Achsenträgerrohres geändert werden sollten, oder aber wenn Reparaturen fällig wurden.

Um beispielsweise mehr Bremsscheiben oder ein breiteres Sonnenrad unterbringen zu können, mußte auch die gesamte Differentialwelle angepaßt und das Radkopfgetriebe individuell montiert werden. Eine Vorratshaltung fertig montierter Radkopfgetriebe war ohne entsprechende Achsrohre und Differentialwellen nicht möglich, so daß auch z. B. Reparaturen sehr lange Ausfallzeiten verursachten oder die Lieferzeiten kompletter Achsen von der Gesamtmontage stark abhängig waren.

Wegen der wechselseitigen Maßbeziehungen der Einbauteile untereinander hatte es sich nämlich als Erschwernis für eine flexible Anpaßbarkeit an wechselnde Verwenderbedürfnisse (Leistung, Bremsenbetätigungsart, Wartung etc.) erwiesen, daß mit einer einmal festgelegten Achsenkonzeption kaum mehr irgendwelche Ausrüstungsvariationen möglich waren. So werden z. B. bei vorgegebenem Hohlrad mit der Differentialwelle nicht nur die Übersetzung des Reduktionsgetriebes, sondern auch die Wirkdurchmesser und Anzahlen der Bremsscheiben, die Art der Hohlradträgerbefestigung und damit auch die Art der Hilfskraftbetätigung starr festgelegt. Eine Übersetzung war nicht mehr variierbar, wenn der Hohlraddurchmesser festgelegt war. Bei gegebenen größeren Hohlrädern ergaben sich auch ungünstigere Durchmesserverhältnisse D/d der Bremsscheiben, d. h., diese konnten in bestimmten Drehzahlbereichen ungleichmäßig laufen, vorzeitig beschädigt werden, oder ihre Bremswirkung war noch unbefriedigend.

Wenn z. B. wegen einer anderen Hilfskraft-Bremsbetätigung ein anderer Hohlradträger nötig wurde, reichte der Platz dafür im Gehäuse nicht oder paßte die Druckmittelzufuhr in der Hohlachse nicht zur Bremskolbenanordnung im Hohlradträger. Durch derartige Abhängigkeiten ergaben sich nicht nur unwirtschaftlichere Fertigungs- und Montagevorgänge, sondern es wurde auch die Nutzung und Wartung beeinträchtigt.

Durch die aus der DE-A 27 26 687 bekannte Ausgestaltung mit einem als dünnwandige Muffe ausgestalteten inneren Bremsscheibenträger erwies es sich auch nicht als möglich, schmale Bremslamellenringe einzusetzen, die speziell bei großen Hohlraddurchmessern ein günstigeres Bremsverhalten ergeben als breitflächige und geringere Kosten. Zudem konnte wegen der Befestigungsverzahnung des Bremsscheibenträgers das Sonnenrad der Differentialwelle nicht einstückig angeformt werden.

Die Aufgabe, die der Erfindung zugrunde liegt, ist es daher, Voraussetzungen für eine variationsgünstigere, rationell und flexibel anpassungsfähige Radkopfgestaltung zu schaffen.

Die Lösung wird mit den Maßnahmen des Anspruchs 1 erreicht. Neben der Möglichkeit, nunmehr sowohl die Sonnenradverzahnung als auch das gesamte Reduktionsgetriebe und gegebenenfalls auch die Bremsscheiben ohne achsseitige Konstruktionsänderung im Durchmesser oder in den Hauptabmessungen zu variieren, ist nun auch der Radkopf insgesamt leicht austauschbar. So kann beispielsweise eine andere Art der Bremsbetätigung (z. B. Hilfskraft über Feder oder Druckmittelkolben oder ein anderes Übersetzungsverhältnis, bzw. andere Bremseabmessungen vorgesehen werden, ohne daß sich die Basis der Achskonstruktion (Hohlachse, Lager, Gehäuse, Hohlrad und Achswellenteilstück) grundsätzlich ändern müssen. Auch bei großen Hohlraddurchmessern sind nun schmale Bremslamellenringe verwendbar.

Vorteilhafte Weiterbildungen der Erfindung beinhalten die Unteransprüche.

Anspruch 2 ergibt sowohl eine von den Wirkdurchmessern seiner Planetenräder und Bremsscheiben unabhängige, zuverlässige Axialfixierung des Sonnenrades bei günstigen Reibungsverhältnissen als auch die Möglichkeit von Abdichtungen des Hohlachseninnenraumes gegen das Radkopfgehäuse. Verschmutzungen und Öl aus dem Bremsenbereich können dadurch nicht in den Differentialbereich und auch nur schwer in den Bereich der Planetenräder gelangen. Durch elastische Abstützung des inneren Bremsscheibenträgers gegenüber dem Sonnenrad ist die Welle zudem bezüglich Maßänderungen im Betrieb z. B. durch Erwärmung anpassungsfähiger.

Anspruch 3 ergibt eine Vergrößerung des Abstützdurchmessers der Innenbremsscheiben und somit Verkleinerung des D/d-Verhältnisses bei gleichzeitiger besserer Ölzuführbarkeit zu den Mittelbremsscheiben über Radialbohrungen im Zahnkranz des Verbindungssteges. Dabei wird auch eine radiale Ausweichmöglichkeit der dünnen Bremslamellen beim Zusammenpressen besser verhindert als mit einer Abstützung im kleinen Durchmesser der Sonnenradverzahnung nach dem Stand der Technik. Dadurch ist es nun möglich, auf gleicher Baulänge entweder mehr Reibscheiben hintereinander zu stellen oder diese mit energiesparenden Federlamellen zu paaren. Die Wärmeentwicklung wird damit auch in den intensiver kühlbaren Bereich in der unmittelbaren Nähe des Hohlrades verlagert und die Bremsleistungen allgemein verbessert. Schließlich bleiben auch die Verschleißteile dieser Konstruktion länger brauchbar und lassen sich billiger herstellen.

Anspruch 4 ergibt eine vor allem baulängensparende Bremsscheibenanordnung, weil der Bremsträgerzahnkranz sich dabei mit der Hohlradträgerbefestigung (Flanschmutter) auf der Hohlachse und mit dem Achswellenteilstück zumindest teilweise radial überdeckt.

Anspruch 5 ermöglicht die Verwendung verschieden gebauter Hohlradträger bzw. darin eingelassener verschiedenartiger Hilfskraftbetätigungen auf an sich gleich gestalteten Hohlachsenendstücken bzw. im gleichen Hohlrad.

Anspruch 6 ergibt eine reibungsgünstigere Mitnutzung der Flanschmuttersicherung bei geringstmöglicher Baulänge, welche für jede Art der erfindungsgemäßen Hohlradträgerausführungen identisch sein kann und deren eventuellen Wechsel erleichtert. Die Flanschmutter stützt zudem auch den Ringkolben mit ab unter gleichzeitiger Sicherung.

Die Erfindung wird anhand der Zeichnungen, welche alle Merkmale vollständig darstellen, näher erläutert. Es zeigen :

Figur 1 die Anordnung mit einem druckmittelbetätigbaren Ringbremskolben im Hohlradträgeraußenring, der gegen Lamellenbremsscheiben arbeitet und gegebenenfalls über Rückholfedern außer Anlage bringbar ist.

Figur 2 die gleiche Anordnung, jedoch mit einem federkraftbetätigbaren Druckring, der mit einem ringförmigen Bremslüftkolben zwischen Druckring und Hohlradträgernabe zusammenarbeitet.

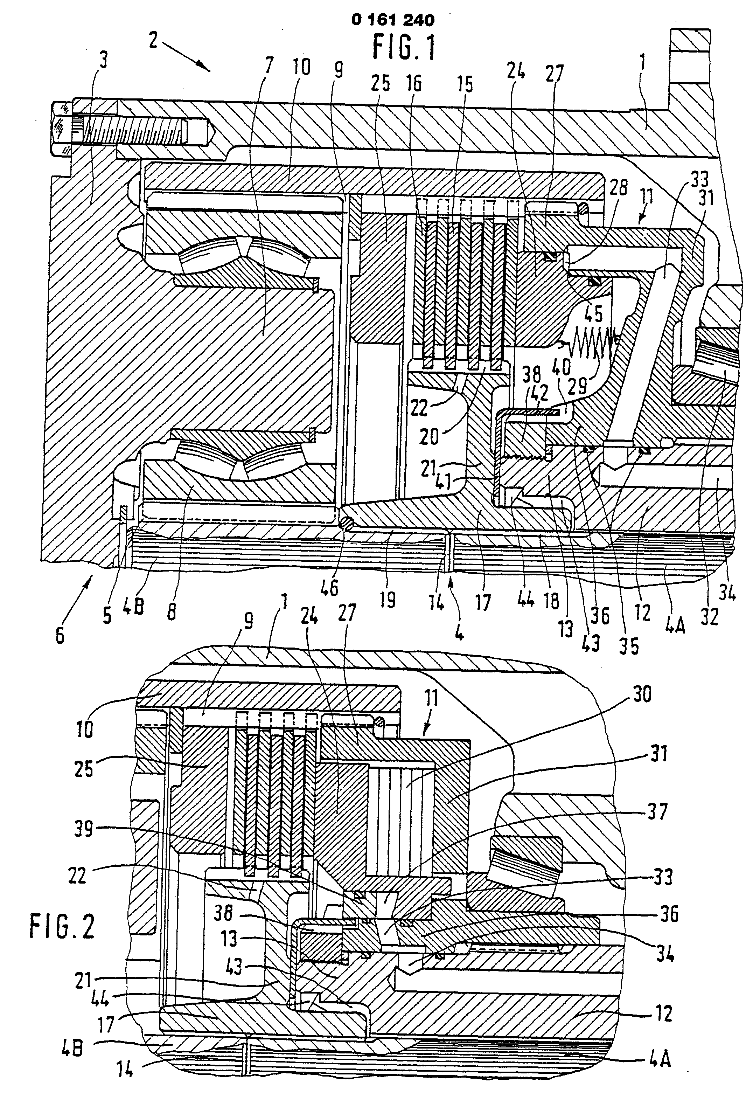

In Figur 1 wird im als Radnabe eines Fahrzeuges dienenden Gehäuse 1 eines Radkopfes 2, welches durch einen Deckel 3 axial verschlossen ist, über eine erfindungsgemäß zwei geteilte Differentialwelle 4A bzw. 4B und einer an deren äußerem Ende angeordneter Sonnenradverzahnung 5 ein Planetengetriebe 6 angetrieben. Dessen Planetenradtragbolzen 7 sind in nach der Erfindung bevorzugter Weise dem Deckel 3 unmittelbar frei tragend angeformt, so daß zwischen den Bolzen 7 bzw. den darauf drehbaren Planetenrädern 8 und den Bremsen nur ein minimales Axialspiel herrscht. Die Räder 8 stehen in ständigem Eingriff sowohl mit der Sonnenradverzahnung 5 als auch mit der Innenverzahnung 9 des Hohlrades 10, welches über einen Hohlradträger 11 an der Hohlachse 12, die die Differentialwelle 4 umschließt, drehfest gehalten ist, so daß über die Bolzen 7 der Deckel 3 bzw. das damit verbundene Gehäuse 1 mit stark reduzierter Drehzahl entgegen der Drehrichtung der Differentialwelle 4 bewegbar ist. Die erfindungsgemäße Unterteilung derselben in ein etwa mit dem freien Ende 13 der Hohlachse 12 endendes erstes Teilstück 4A (Achswelle) und ein daran fluchtend angesetztes zweites Teilstück 4B (Sonnenradwelle) erfolgt derart, daß eine Trennfuge 14 etwa mittig unter den inneren bzw. äußeren Bremsscheiben 15, 16 zu liegen kommt und daß diese von einem muffenförmigen Verbindungsteil 17 unter Eingriff desselben in Außenverzahnungen 18, 19 der Wellen-Teilstücke 4A, 4B zentriert und drehfest gehalten werden. Das muffenförmige Verbindungsteil 17 braucht dazu nicht verzahnungsgleich mit der Sonnenradverzahnung 5 sein, jedoch könnte an deren Stelle für eine evtl. gewünschte Alternativübersetzung auch ein eigenes (nicht gezeigtes), größeres Sonnenrad einer gleichen Außenverzahnung 19 wie für das Verbindungsteil 17 aufgeschoben sein. Das Verbindungsteil erhält bevorzugt einen Bremsträgerzahnkranz 20, an dem die inneren Bremsscheiben 15 abgestützt sind und welcher durch eine entsprechend dimensionierte Bremsträgerscheibe 21 auf einen Durchmesser gebracht wird, der etwa dem Umlaufkreis der Planetentragbolzen 7 entspricht. Über etwa radiale Öldurchtrittsbohrungen 22 aus einem Ölsammelraum vor den Bolzen 7 zum Mittelteil des Bremsträgerzahnkranzes 20 werden, dank dessen erhöhter Winkelgeschwindigkeit, auch bei hohen Belastungen die Bremsscheiben 15, 16 durch den Zentrifugalkrafteinfluß ausreichend mit Öl versorgt. Die äußeren Bremsscheiben 16, welche in der Innenverzahnung 9 des Hohlrades 10 drehfest sind, sind mit den inneren Bremsscheiben 15 derart im Wechsel angeordnet, daß jeder der Andruckscheiben 24, 25 der Bremse 15, 16 nochmals eine äußere Bremsscheibe 16 zugewandt ist. Die achsseitige Anlaufscheibe 24 kann dabei, je nach Art der Hilfskraftbetätigung, entweder ein Ringkolben (Fig. 1) oder ein Federdruckring (Fig. 2) sein.

Die getriebeseitige Anlaufscheibe 25 ist als ein gegen die Bremsdruckkräfte biegesteifer Ring mit etwa Lamellenbreite ausgebildet, welcher (vorzugsweise außer Zahngriff im Hohlrad 10 bleibend drehbar und axialverschieblich) knapp vor den Planetenrädern 7 durch einen in die Innenverzahnung 9 eingesetzten Sperring 26 axial vor den Planetenrädern 8 abgestützt ist.

Zur Bremsaktivierung ist die jeweilige achsseitige Andruckscheibe 24 (Ringkolben bzw. Federdruckring) im Ringbund 27 des ebenfalls in der Innenverzahnung 9 axial fixierten Hohlradträgers 11 verschieblich geführt. Um entweder einem die Hilfskraftbetätigung ermöglichenden Ringzylinder 28 (nach Fig. 1), welchem bedarfsweise Rückholfedern 29 zugeordnet sein können, oder einem Federpaket 30 zwischen der Anlaufscheibe 24 und dem Steg 31 des Hohlradträgers 11 trotz Kurzbauweise noch ausreichend Raum bieten zu können, wird der Steg 31 bei bevorzugter Ausführung mit einer achsseitigen Ausladung und teilweise radialer Überdeckung des auf der Hohlachse 12 nächstgelegenen Radlagers 32 ausgeführt. Im Steg 31 sind (bei druckbetätigter Bremse nach Fig. 1) Ölzufuhrleitungen 33 zum Ringzylinder 28 vorgesehen, welche mit einem Ölkanal 34 in der Hohlachse 12 über die Wellenabdichtung 35 in Verbindung stehen. Diese Wellenabdichtung 35 paßt auch für einen alternativ verwendbaren Hohlradträger 11, bei dem sich (nach Fig. 2) im Ringbund 27 des Hohlradträgers ein Federpaket 30 und zwischen der Nabe 36 und der darauf verschieblichen, achsseitigen Andruckscheibe 25 ein Bremslüftzylinder 37 befindet. Dessen getriebeseitige Stirnfläche wird von einem über die Flanschmutter 38 der Hohlachse 12 an derselben axial abgestützten Ringkolben 39 gebildet, welcher sowohl gegen die Anlaufscheibe 24 als auch gegen die Nabe 36 des Hohlradträgers 11 abgedichtet ist. Die Flanschmutter 38 ist (bei beiderlei Varianten) durch in Vertiefungen 40 in der Stirnfläche der Nabe 36 eingeschlagene Abbiegungen 42 einer großflächigen Anlaufscheibe 41 gesichert, welche zwischen dem freien Ende 13 der Hohlachse 12 und dem Verbindungsteil 17 bzw. vorzugsweise an der davon ausgehenden Bremsträgerscheibe 21 anliegend eingesetzt ist. In einer Spaltverbreiterung 43 des Ringspaltes zwischen dem Achswellenteilstück 4A und dem freien Ende 13 der Hohlachse 12 ist ein Lippendichtring 44 zur Vermeidung von Ölaustausch zwischen Radkopf 2 und Differentialgetriebe (nicht gezeigt) eingebaut. Diese Lippendichtung 44 kann zwecks Kurzbauvorteilen vorzugsweise auf einen der Hohlachse 12 zugewandten muffenförmigen Vorsprung des Verbindungsteiles 17 aufgesetzt werden, welcher in die Hohlachse im Bereich der Spaltverbreiterung 43 eingeschoben ist. Sowohl die Anlaufscheibe 41 als auch die Lippendichtung 44 können auf diese Weise, ausgehend vom Deckel 3 des Gehäuses 1, gegen die Hohlachse 12 bzw. das Axialradlager unter Vorspannung gehalten werden. Für hermetische Wellenabdichtung ist auf derselben selbst abtriebsseitig des Verbindungsteiles 17 noch ein Dichtring 46 günstig.

Die Arbeitsweise der erfindungsgemäßen Bremsanordnung ist nach Fig. 1 nur bei erhöhtem Druckmitteldruck in den Ölzuführungen 33, 34 und im Öldruckzylinder 28 schließend, indem die Andruckscheibe 24 (Ringkolben) — sofern vorhanden, entgegen dem Widerstand der Rückholfedern 29 — mehr oder weniger stark die mit Relativdrehzahlen umlaufenden Bremsscheiben 15, 16 gegen die Andruckscheibe 25 axial zusammengepreßt wird. Ob die Rückstellung der Andruckscheibe 24 bei Druckabsenkung aufgrund von selbst zurückfedernden Lamellen der Bremsscheiben 15, 16 oder mittels separaten Rückholfedern 29 erfolgt, ist für die Erfindung ohne Belang.

Die Arbeitsweise der erfindungsgemäßen Bremsanordnung ist nach Fig. 2 mittels der Federkraft bei abgesenktem Druckmitteldruck im Bremslüftzylinder 37 stets schließend und die Bremswirkung kann erst bei ansteigendem Druckmitteldruck in den Ölzuführungen allmählich gegen die Federkraft aufgehoben werden.

**Patentansprüche**

1. Anordnung einer Bremse (15, 16, 17) in einem Radkopf (2),
der ein von einer Differentialwelle (4) angetriebenes Reduktions-Planetengetriebe (6) und ein als Radnabe dienendes Gehäuse (1) aufweist,
das einen stirnseitigen Deckel (3) mit an demselben innen befestigten, achsparallelen Planetenradtragbolzen (7) hat,
und welches Gehäuse (1) auf einem Axialradlager (32) gegenüber einer die Differentialwelle (4) eng umschließenden und mit einem Fahrgestell verbundenen Hohlachse (12) drehbar ist,
aus welcher die Differentialwelle (4) durch einen separaten, mit der Differentialwelle (4) drehfest und axial verschiebbar verbundenen inneren Bremsscheibenträger (17, 21) kragt, wo sie unter Axialabstützung am Deckel (3) ein Sonnenrad (5) des Planetengetriebes (6) trägt,
welches Sonnenrad (5) mittels mit ihm kämmender und auf den Planetenradtragbolzen (7) umlaufender Planetenräder (8) gegen ein Hohlrad (10) radial abgestützt ist,
welches Hohlrad (10) als äußerer Bremsscheibenträger dient und über einen, eine Hilfskraftbetätigung (28, 30) für die Bremse (15, 16, 17) umschließenden Hohlradträger (11) an der Hohlachse (12) drehfest sowie radial und axial abgestützt ist,
dadurch gekennzeichnet, daß die Differentialwelle (4) im Bereich des inneren Bremsscheibenträgers (17, 21) geteilt ist, wobei sowohl das das Sonnenrad (5) tragende Wellenteilstück (4B) als auch das antriebsseitige Achswellenteilstück (4A) axial verschiebbar und drehfest mit dem inneren Bremsscheibenträger (17, 21) verbunden ist.

2. Anordnung nach Anspruch 1, dadurch gekennzeichnet, daß der innere Bremsscheibenträger (17, 21) zwischen dem Sonnenrad (5) auf der Sonnenradwelle (4B) und einer der Hohlachse (12) vorgeordneten Anlaufscheibe (41) sowie einem Dichtring (46) axial abgestützt ist.

3. Anordnung nach einem der vorangehenden Ansprüche, dadurch gekennzeichnet, daß der innere Bremsscheibenträger (17, 21) eine radial innenliegende Muffe (17) und einen durch eine Bremsträgerscheibe (21) damit verbundenen Bremsträgerzahnkranz (20) aufweist.

4. Anordnung nach Anspruch 3, dadurch gekennzeichnet,
daß der Bremsträgerzahnkranz (20) einen Kleinstdurchmesser hat, der größer als der Außendurchmesser einer Flanschmutter (38) ist, mit welcher der Hohlradträger (11) am Ende der Hohlachse (12) auf dort vorhandene Ölzufuhrleitungen (33) zur Hilfskraftbetätigung (28, 30) axial festgehalten ist,

und daß er einen Größtdurchmesser hat, der kleiner als der Innendurchmesser einer im Hohlradträger (11) axial festgehaltenen Andruckringscheibe (25) ist, gegen welche die Bremsscheiben (15, 16) durch die Hilfskraftbetätigung (28, 30) andrückbar sind.

5. Anordnung nach einem der vorangehenden Ansprüche, dadurch gekennzeichnet, daß sowohl das Hohlrad (10), das Gehäuse (1) und der Bremsträgerzahnkranz (20) als auch die Hohlachse (12) ihre Ölzufuhrleitungen (34) und ihre Flanschmutter (38) für wahlweise Verwendung der Bremse (15, 16, 17) entweder mit einer Hilfskraftbetätigung (28, 30) mittels in einem angepaßten Hohlradträger (11) gegen die Bremsscheiben (15, 16) mittels Ringzylinder (28) im Ringbund (27) oder mittels vorgespanntem Federpaket (30) und einem Bremslüftzylinder (37) im Innenkranz eines entsprechend angepaßten Hohlradträgers (11) zusammen unverändert verwendbar sind.

6. Anordnung nach einem der vorangehenden Ansprüche, dadurch gekennzeichnet, daß die auf dem freien Ende (13) der Hohlachse (12) angeordnete Flanschmutter (38), die den Hohlradträger (11) bzw. das Achsradlager (32) unter Vorspannung hält, durch eine zwischen der Stirnseite der Hohlachse (12) und dem inneren Bremmscheibenträger (17, 21) stehende Anlaufscheibe (41) mittels von dieser in axiale Vertiefungen (40) der Stirnfläche der Nabe (36) eingesteckter Abbiegungen (42) der Anlaufscheibe (41) verdrehgesichert ist.

**Claims**

1. Arrangement of a brake (15, 16, 17) in a wheel head (2) which contains a

reduction/planetary gear (6) driven by a differential shaft (4) and also a casing (1) used as a wheel hub,

having a cover (3) on the front end on whose inside face the planetary gear supporting bolts (7) are secured in parallel alignment.

where the casing (1) is mounted rotatably on an axial wheel bearing (32) opposite a hollow shaft (12) which closely surrounds the differential shaft (4) and is connected to the chassis,

out of which the differential shaft (4) protrudes through a separate internal brake disc carrier (17, 21) which is connected to the differential shaft (4) in a torsion-proof, axially displaceable manner and in which the shaft (4) carries a sun gear (5) belonging to the planetary gear (6) with axial support from the cover (3),

and this sun gear (5) is radially supported against a ring gear (10) by planet gears (8) which mesh with the sun gear and rotate about the planetary gear supporting bolts (7),

where the ring gear (10) acts as the external brake disc carrier and is radially and axially supported in a non-rotary manner against the hollow shaft (12) by means of a ring gear carrier (11) which contains it and which acts as an auxiliary actuation device (28, 30) for the brake (15, 16, 17),

and characterised in that the differential shaft (4) is divided near the internal brake disc carrier (17, 21) and the shaft section (4B) carrying the sun gear (5) together with the axle shaft section on the input side (4A) are both axially displaceable and connected to the inner brake disc carrier (17, 21) in a non-rotary manner.

2. Arrangement according to claim 1 characterised in that the internal brake disc carrier (17, 21) is axially supported between the sun gear (5) on the sun gear shaft (4B) and a front-mounted thrust washer (41) and sealing ring (46) on the hollow shaft (12).

3. Arrangement according to one of the preceding claims, characterised in that the internal brake disc carrier (17, 21) contains an internal, radially mounted sleeve (17) and a brake carrier gearing (20) connected to the sleeve by a brake bearing disc (21).

4. Arrangement according to claim 3, characterised in that

the brake carrier gearing (20) has a minimum diameter which is larger than the external diameter of a flange nut (38) with which the ring gear carrier (11) is axially secured to the end of the hollow shaft (12) on oil feed pipes (33) located there for the auxiliary actuation device (28, 30),

and has a maximum diameter which is smaller than the internal diameter of a circular thrust washer (25) secured axially in the ring gear carrier (11) against which the brake discs (15, 16) can be pressed by means of the auxiliary actuation device (28, 30).

5. Arrangement according to one of the preceding claims, characterised in that both the ring gear (10), the casing (1) and the brake carrier gearing (20) as well as the hollow shaft (12), its oil feed lines (34) and its flange nut (38) can be used without modification for optional operation of the brake (15, 16, 17) with an auxiliary actuation device (28, 30) either by means of an adapted ring gear carrier (11) held against the brake discs (15, 16) by a ring cylinder (28) in a collar (27) or by means of a pre-loaded spring pack (30) and a pneumatic brake cylinder (37) in the internal ring of an appropriately adapted ring gear carrier (11).

6. Arrangement according to one of the preceding claims, characterised in that the flanged nut (38) located on the free end (13) of the hollow shaft (12) which maintains the pre-loading on the ring gear carrier (11) and the axle wheel bearing respectively (32) is secured non-rotatably by a thrust washer (41) located between the front face of the hollow shaft (12) and the internal brake disc carrier (17, 21) by means of guides (42) on the thrust washer (41) which are inserted in axial grooves (40) in the front face of the hub (36).

**Revendications**

1. Disposition d'un frein (15, 16, 17) dans une tête de roue (2)

qui comporte un réducteur planétaire (6) entraîné par un arbre de différentiel (4), et un carter (1) servant de moyeu de roue,

qui est pourvue d'un couvercle frontal (3) sur l'intérieur duquel sont fixés des axes porte-satellites (7) qui sont parallèles,

dont le carter (1) est rotatif sur un roulement axial de roue (32) par rapport à un axe creux (12) qui entoure étroitement l'arbre de différentiel (4) et qui est fixé à un châssis,

dans laquelle l'arbre de différentiel (4) s'étend à travers et au-delà d'un support intérieur (17, 21) de disques de frein qui est séparé, solidaire en rotation et coulissant axialement par rapport à cet arbre (4), l'arbre portant au-delà un pignon planétaire (5) du réducteur (6) avec appui axial contre le couvercle (3),

dont le pignon planétaire (5) est appuyé radialement contre une roue à denture intérieure (10) au moyen de pignons satellites (8) s'engrenant sur lui et tournant sur les axes porte-satellites (7),

et dont la roue à denture intérieure (10) sert de support extérieur de disques de frein et est rendue solidaire de l'axe creux (12), à la fois radialement, axialement et en rotation, au moyen d'un support (11) entourant un dispositif assisté (28, 30) d'actionnement du frein (15, 16, 17), caractérisée en ce que l'arbre de différentiel (4) est sectionné dans la zone du support intérieur (17, 21) de disques de frein, la partie d'arbre (4B) portant le pignon planétaire (5) et la partie d'arbre (4A) située du côté de l'entraînement étant coulissantes axialement et solidaires en rotation par rapport au support intérieur (17, 21) de disques de frein.

2. Disposition selon la revendication 1, caractérisée en ce que le support intérieur (17, 21) de disques de frein est appuyé axialement entre le pignon planétaire (5) sur l'arbre planétaire (4B) et une rondelle de butée (41) disposée devant l'arbre creux (12), ainsi qu'une bague d'étanchéité (46).

3. Disposition selon l'une quelconque des revendications précédentes, caractérisée en ce que le support intérieur (17, 21) de disques de frein comporte un manchon intérieur (17) et une couronne porte-disques (20) liée à ce manchon par un flasque de support (21).

4. Disposition selon la revendication 3, caractérisée :

en ce que la couronne porte-disques (20) a un diamètre minimal plus grand que le diamètre extérieur d'un écrou de bridage (38), par lequel le support (11) de la roue à denture intérieure est fixé axialement sur l'extrémité de l'arbre creux (12) par rapport à des conduits hydrauliques (33) prévus à cet endroit pour le dispositif assisté d'actionnement (28, 30),

et en ce que cette couronne a un diamètre maximal plus petit que le diamètre intérieur d'un disque annulaire de butée (25) qui est fixé axialement dans le support (11) de la roue à denture intérieure et contre lequel les disques de frein (15, 16) sont poussés par le dispositif assisté d'actionnement (28, 30).

5. Disposition selon l'une quelconque des revendications précédentes, caractérisée en ce que la roue à denture intérieure (10), le carter (1) et la couronne porte-disques (20), ainsi que l'arbre creux (12), ses conduits hydrauliques (34) et son écrou de bridage (38) sont utilisables ensemble sans changement pour une utilisation du frein (15, 16, 17) soit avec un actionnement assisté (28, 30) au moyen d'un cylindre annulaire (28) disposé en face des disques de frein (15, 16) dans un bord annulaire (27) d'un support approprié (11) de la roue à denture intérieure, soit au moyen d'un groupe précontraint de ressorts (30) et d'un cylindre à air comprimé (37) ménagé dans une couronne intérieure d'un support (11) de roue à denture intérieure qui est agencé à cet effet.

6. Disposition selon l'une quelconque des revendications précédentes, caractérisée en ce que l'écrou de bridage (38) qui est monté sur l'extrémité libre (31) de l'arbre creux (12) et qui maintient sous précontrainte le support (11) de la roue à denture intérieure et le roulement axial de roue (32), est bloqué en rotation par une rondelle de butée (41) placée entre la face frontale de l'arbre creux (12) et le support intérieur (17, 21) de disques de frein, au moyen de parties (42) de cette rondelle (41) qui sont pliées et engagées dans des évidements axiaux (40) de la face frontale du moyeu (36) du support de la roue à denture intérieure.

# FIG.1

# FIG.2